(19) **Europäisches Patentamt**

**European Patent Office**

**Office européen des brevets**

(11) **EP 1 721 959 A2**

(12) **EUROPÄISCHE PATENTANMELDUNG**

(43) Veröffentlichungstag:
**15.11.2006 Patentblatt 2006/46**

(51) Int Cl.:
***C10M 171/06*** *(2006.01)*     ***C10M 159/10*** *(2006.01)*
***C10M 171/02*** *(2006.01)*

(21) Anmeldenummer: **06110904.7**

(22) Anmeldetag: **09.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **24.03.2005 DE 102005014270**

(71) Anmelder:
 • **Rhein Chemie Rheinau GmbH**
  **68219 Mannheim (DE)**
 • **LANXESS Deutschland GmbH**
  **51369 Leverkusen (DE)**

(72) Erfinder:
 • **Ziser, Torsten, Dr.**
  **69488 Birkenau (DE)**
 • **Galda, Patrick, Dr.**
  **76149 Karlsruhe (DE)**
 • **Früh, Thomas, Dr.**
  **67117 Limburgerhof (DE)**
 • **Fessenbecker, Achim, Dr.**
  **68753 Waghäusel (DE)**
 • **Obrecht, Werner, Prof. Dr.**
  **47447 Moers (DE)**

(74) Vertreter: **Gille Hrabal Struck Neidlein Prop Roos**
 **Patentanwälte**
 **Brucknerstrasse 20**
 **40593 Düsseldorf (DE)**

(54) **Verwendung von vernetzten Mikrogelen zur Modifikation des temperaturabhängigen Verhaltens von nicht-vernetzbaren organischen Medien**

(57) Die Erfindung betrifft die Verwendung von Mikrogelen zur Modifikation des Temperaturverhaltens von nicht-vernetzbaren organischen Medien insbesondere in Hochtemperaturanwendungen bei mindestens etwa 100˚C, wie in Motorölen, Getriebeölen etc.

**EP 1 721 959 A2**

**Beschreibung**

Die Erfindung betrifft die Verwendung von Mikrogelen zur Modifikation des Temperaturverhaltens von nicht-vernetzbaren organischen Medien insbesondere in Hochtemperaturanwendungen bei mindestens etwa 100°C, wie in Motorölen, Getriebeölen etc.

Es ist bekannt, Kautschukgele, auch modifizierte Kautschukgele, in verschiedensten Anwendungen zu verwenden. So werden sie beispielsweise Kautschuken einzusetzen, um beispielsweise den Rollwiderstand bei der Herstellung von Kfz-Reifen zu verbessern (siehe z. B. DE 42 20 563, GB-PS 10 78 400 EP 405 216 und EP 854 171). Hierbei werden die Kautschukgele immer in feste Matrices eingearbeitet.

Bekannt ist auch, Druckfarbenpigmente in dafür geeigneten flüssigen Medien fein verteilt einzuarbeiten, um letztendlich Druckfarben herzustellen (siehe z. B. EP 0 953 615 A2, EP 0 953 615 A3). Hierbei werden Teilchengrößen von bis hinab zu 100 nm erreicht.

In Chinese Journal of Polymer Science, Band 20, Nr. 2, (2002), 93 - 98, werden durch energiereiche Strahlung vollständig vernetzte Mikrogele und ihre Verwendung zur Erhöhung der Schlagzähigkeit von Kunststoffen beschrieben. Die US 20030088036 A1 offenbart verstärkte wärmehärtende Harzzusammensetzungen, bei deren Herstellung ebenfalls strahlenvernetzte Mikrogelpartikel mit wärmehärtenden Prepolymeren vermischt werden (s. a. EP 1262510 A1).

Aus der DE 2910154 sind Dispersionen von Kautschukteilchen mit organischen Lösungsmitteln bekannt.

Aus der DE-A-3742180 sind Dispersionen von silicon-haltigen Pfropfpolymerisaten in flüssigen Amiden bekannt.

Mikrogel-enthaltende Zusammensetzungen sind grundlegend in der nichtvorveröffentlichten internationalen Anmeldung PCT/EP2004/052290 des vorliegenden Anmelders beschrieben worden.

Die Erfinder der vorliegenden Erfindung fanden nun, dass Mikrogele das temperaturabhängige, insbesondere rheologische Verhalten nicht-vernetzbarer organischer Medien insbesondere bei hohen Temperaturen von mindestens etwa 100°C verbessern und somit neue Anwendungen der Mikrogele zugänglich zu machen, wie beispielsweise in Motorölen, Getriebeölen etc. Dabei macht man sich insbesondere die Nanoeigenschaften der verwendeten Mikrogele zunutze.

So zeigen erfindungsgemäße Zusammensetzungen überraschenderweise gerade sehr interessante temperaturabhängige rheologische Eigenschaften, wenn in diesen die Mikrogele in geringen Konzentrationen eingesetzt werden.

Die vorliegende Erfindung betrifft somit die Verwendung von vernetzten Mikrogelen (B) als Zusatz für nicht-vernetzbare organische Medien (A) zur Anwendung bei Temperaturen von mindestens 100°C, bevorzugt mindestens etwa 200°C, noch bevorzugter bei mindestens etwa 300 °C, insbesondere die Verwendung als rheologisches Additiv. Die genannten Temperaturen sind Temperaturen, denen die Zusammensetzung aus Mikrogel (B) und nicht-vernetzbaren organische Medien (A) bei der Anwendung ausgesetzt ist, bzw. Temperaturen, die die genannte Zusammensetzung bei der Anwendung sporadisch oder dauerhaft erreicht.

Die vorliegende Erfindung betrifft somit weiterhin die Verwendung von vernetzten Mikrogelen (B) als Additiv zur Modifikation des temperaturabhängigen Verhaltens nicht-vernetzbarer organischer Medien (A), insbesondere des temperaturabhängigen Verhaltens, das charakterisiert wird durch die kinematischen Viskositäten bei 40°C und 100°C der Zusammensetzung aus vernetzten Mikrogelen (B) und nicht-vernetzbaren organischen Medien (A).

Erfindungsgemäß wird durch den Zusatz des Mikrogels (B) insbesondere die Viskosität nicht-vernetzbarer organischer Medien bei hohen Temperaturen von mindestens etwa 100° erhöht.

D.h. die Erfindung betrifft auch die Verwendung von vernetzten Mikrogelen (B) als Zusatz in nicht-vernetzbaren organischen Medien (A) für Hochtemperaturanwendungen, die aus der Gruppe ausgewählt werden, die besteht aus: Motorölen, Getriebeölen, Hydraulikölen, Turbinenölen, Kompressorenölen, Industrieölen, Metallbearbeitungsflüssigkeiten und Sägekettenölen. Die genannten nicht-vernetzbaren organischen Medien werden insbesondere bei Temperaturen von mehr als 100°C, bevorzugt bei mindestens etwa 200°C, noch bevorzugter bei mindestens etwa 300 °C angewendet. Die genannten Temperaturen sind Temperaturen, denen die Zusammensetzung aus Mikrogel (B) und nicht-vernetzbaren organische Medien (A) bei der Anwendung ausgesetzt sind, bzw. Temperaturen, die die genannte Zusammensetzung bei der Anwendung sporadisch oder dauerhaft erreicht.

Insbesondere betrifft die Erfindung die Verwendung von vernetzten Mikrogelen (B) zur Modifikation des temperaturabhängigen Verhaltens nicht-vernetzbarer organischer Medien (A), in dem durch den Zusatz des Mikrogels (B) die aus den Viskositäten des nicht-vernetzbaren organischen Mediums (A) bei 40°C und 100°C bestimmte Kennzahl um mindestens 10 %, bevorzugt um mindestens 50 %, noch bevorzugter um mindestens 100 %, besonders bevorzugt um 300 % erhöht wird, wobei die Kennzahl wir folgt ermittelt wird:

$$\text{Kennzahl} = \left[(L-U)/(L-H)\right]\times 100$$

wobei

L: kinematische Viskosität bei 40˚C eines Referenz-Mediums mit der Kennzahl 0, das dieselbe kinematische Viskosität bei 100˚C besitzt, wie das zu bestimmende nicht-vernetzbare Medium (A)

H: kinematische Viskosität bei 40˚C eines Referenz-Mediums mit Kennzahl 100, das dieselbe kinematische Viskosität bei 100˚C besitzt, wie das zu bestimmende nicht-vernetzbare Medium

U: : kinematische Viskosität bei 40˚C des zu bestimmenden nicht-vernetzbaren Mediums.

Die Bestimmung der kinematischen Viskosität erfolgt dabei nach DIN 51562-1 "Messung der kinematischen Viskosität mit dem Ubbelohde-Viskosimeter".

Es wurde gefunden, dass diese Kennzahl für Mikrogel-haltige Schmierstoffe im Vergleich zum reinen Schmierstoff deutlich gesteigert werden kann; beispielsweise führt eine zweiprozentige Zugabe des Mikrogels Micromorph 5 P zum Öl Nynas T110 zu einer Steigerung der Kennzahl von über 400 %. Solcherart modifizierte Flüssigkeiten zeigen eine deutlich veränderte, bzw. verbesserte Temperaturabhängigkeit der Viskosität. So bleibt im Bereich tiefer Temperaturen wie unterhalb von etwa -10˚ die ursprüngliche Viskosität des organischen Mediums nahezu unverändert erhalten, während bei höheren Temperaturen wie oberhalb von 100˚C der Erhalt eines ausreichenden Viskositätsniveaus erzielt wird. Dies gewährleistet die Ausbildung eines sehr gleichmäßigen Flüssigkeitsfilms über einen weiten Temperaturbereich, was insbesondere im Bereich der Motoröle sehr attraktiv ist, wo das Schmierverhalten beim Kaltstart aber auch im Hochtemperaturbereich günstig beeinflusst werden kann.

Zudem können die beschriebenen Zusammensetzungen Eigenschaften wie ausgezeichnete Scherstabilität und hervorragende Transparenz aufweisen, so dass kommerziell sehr interessante Produkte entstehen.

Das nicht-vernetzbare organische Medium (A), weist bevorzugt bei einer Temperatur von 120˚C eine Viskosität von weniger als 30000 mPas auf. Bevorzugter ist die Viskosität des nicht-vernetzbaren organischen Mediums (A) weniger als 1000 mPas, bevorzugter weniger als 200 mPas, noch bevorzugter weniger als 100 mPas bei 120˚C, noch bevorzugter weniger als 20 mPas bei 120˚C. Die dynamische Viskosität des nicht-vernetzbaren, organischen Mediums (A) wird bei einer Drehzahl von 5 s$^{-1}$ mit einem Kegel-Platte-Meßsystem nach DIN 53018 bei 120˚C bestimmt.

Mikrogele (B)

Das erfindungsgemäß verwendete Mikrogel (B) ist insbesondere ein vernetztes Mikrogel. In einer bevorzugten Ausführungsform handelt es sich nicht um ein durch energiereiche Strahlung vernetztes Mikrogel. Energiereiche Strahlung meint hier zweckmäßig elektromagnetische Strahlung einer Wellenlänge von weniger als 0,1 $\mu$m. Die Verwendung von durch energiereiche Strahlung vernetzten Mikrogelen, wie beispielsweise in Chinese Journal of Polymer Science, Band 20, Nr. 2, (2002), 93 - 98, beschrieben, ist nachteilig, da durch energiereiche Strahlung vernetzte Mikrogele in industriellem Maßstab praktisch nicht hergestellt werden können. Außerdem gehen mit der Verwendung energiereicher Strahlung aus radioaktiven Strahlungsquellen wie radioaktivem Kobalt schwerwiegende Sicherheitsprobleme einher.

In einer bevorzugten Ausführungsform der Erfindung weisen die Primärpartikel des Mikrogels (B) eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z. B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht der Zusammensetzung, beispielsweise mit einem Elektronenmikroskop, erkennbar im wesentlichen eine kreisförmige Fläche abbilden. Da die Mikrogele bei der Einarbeitung in die Zusammensetzungen ihre Form bzw. Morphologie im wesentlichen nicht verändern, gelten die vorstehenden und nachstehenden Ausführungen in gleicher Weise auch für die mikrogelenthaltenden Zusammensetzungen.

Bei den erfindungsgemäß verwendeten Mikrogelen (B) beträgt die Abweichung der Durchmesser eines einzelnen Primärpartikels des Mikrogels, definiert als

$$[(d1 - d2) / d2] \times 100,$$

worin d1 und d2 zwei beliebige Durchmesser des Primärpartikels sind und d1 > d2 ist, bevorzugt weniger als 250 %, bevorzugter weniger als 100 %, noch bevorzugter weniger als 80 %, noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser des Primärpartikels sind und d1 > d2 ist, von weniger als 250 %, bevorzugt weniger als 100 %, noch bevorzugter weniger als 80 %, noch bevorzugter weniger als 50 % auf.

Die vorstehend erwähnte Abweichung der Durchmesser der einzelnen Partikel kann nach folgendem Verfahren bestimmt werden. Zunächst wird ein Dünnschnitt der erfindungsgemäßen verfestigten Zusammensetzung hergestellt. Dann wird eine transmissionselektronen-mikroskopische Aufnahme bei einer Vergrößerung von beispielsweise 10 000fach oder 200 000fach hergestellt. In einer Fläche von 833,7 x 828,8 nm wird an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikein das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

Die Primärpartikel des Mikrogels (B) weisen bevorzugt einen durchschnittlichen Teilchendurchmesser von 5 bis 500 nm, bevorzugter von 20 bis 400 nm, bevorzugter von 20 bis 300 nm, bevorzugter von 20 bis 250 nm, noch bevorzugter 20 bis 99, noch bevorzugter 40 bis 80 nm auf (Durchmesserangaben nach DIN 53206). Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Da sich die Morphologie der Mikrogele bei der Einarbeitung in das nicht-vernetzbare organische Medium (A) im wesentlichen nicht verändert, entspricht der durchschnittliche Teilchendurchmesser der dispergierten Primärpartikel im wesentlichen dem durchschnittlichen Teilchendurchmesser der dispergierten Primärpartikel, in den Zusammensetzungen bzw. den daraus erhaltenen Weiterverarbeitungsprodukten, wie Motoröle etc. Die erfindungsgemäß verwendeten Mikrogele (B) weisen zweckmäßig in Toluol bei 23˚C unlösliche Anteile (Gelgehalt) von mindestens etwa 70 Gew.-%, bevorzugter mindestens etwa 80 Gew.-%, noch bevorzugter mindestens etwa 90 Gew.-% auf.

Der in Toluol unlösliche Anteil wird dabei in Toluol bei 23˚ bestimmt. Hierbei werden 250 mg des Mikrogels in 20 ml Toluol 24 Stunden unter Schütteln bei 23˚C gequollen. Nach Zentrifugation mit 20.000 Upm wird der unlösliche Anteil abgetrennt und getrocknet. Der Gelgehalt ergibt sich aus dem Quotienten des getrockneten Rückstands und der Einwaage und wird in Gewichtsprozent angegeben.

Die erfindungsgemäß verwendeten Mikrogele (B) weisen zweckmäßig in Toluol bei 23˚C einen Quellungsindex von weniger als etwa 80, bevorzugter von weniger als 60 noch bevorzugter von weniger als 40 auf. So können die Quellungsindizes der Mikrogele (Qi) besonders bevorzugt zwischen 1 - 15 und 1-10 liegen. Der Quellungsindex wird aus dem Gewicht des in Toluol bei 23˚ für 24 Stunden gequollenen Lösungsmittelhaltigen Mikrogels (nach Zentrifugation mit 20.000 Upm) und dem Gewicht des trockenen Mikrogels berechnet:

$$Qi = \text{Naßgewicht des Mikrogels /Trockengewicht des Mikrogels.}$$

Zur Ermittlung des Quellungsindex läßt man 250 mg des Mikrogels in 25 ml Toluol 24 h unter Schütteln quellen. Das Gel wird abzentrifugiert und gewogen und anschließend bei 70 ˚C bis zur Gewichtskonstanz getrocknet und nochmals gewogen.

Die erfindungsgemäß verwendeten Mikrogele (B) weisen zweckmäßig Glastemperaturen Tg von -100˚C bis +120˚C, bevorzugter von -100˚C bis +100˚C, noch bevorzugter von -80˚C bis +80 ˚C auf. In seltenen Fällen können auch Mikrogele verwendet werden, die aufgrund ihres hohen Vernetzungsgrades keine Glastemperatur aufweisen.

Die erfindungsgemäß verwendeten Mikrogele (B) weisen bevorzugt eine Breite des Glasübergangs von größer als 5 ˚C, bevorzugt größer als 10˚C, bevorzugter größer als 20 ˚C auf.

Die Bestimmung der Glasübergangstemperaturen (Tg) und der Breite des Glasübergangs (ΔTg) der Mikrogele erfolgt durch Differentialthermoanalyse (DTA, engl. Differential-Scanning-Calorimetry (DSC)) unter folgenden Bedingungen: Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10 - 12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100˚C abgekühlt und dann mit einer Geschwindigkeit von 20K/min auf +150˚C aufgeheizt wird. Der zweite DSC-Zyklus wird durch sofortige Abkühlung der Probe begonnen, sobald eine Probentemperatur von +150˚C erreicht ist. Die Abkühlung erfolgt mit einer Geschwindigkeit von ungefähr 320 K/min. Im zweiten Aufheizzyklus wird die Probe wie im ersten Zyklus noch einmal auf +150˚C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die erfindungsgemäß verwendeten Mikrogele können an sich in bekannter Weise hergestellt werden (s. zum Beispiel EP-A- 405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben.

Unter Mikrogelen werden zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | Styrol-Butadien-Copolymerisate mit Styrolgehalten von 1-60, vorzugsweise 5-50 Gewichtsprozent, |
| X-SBR: | carboxlylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und | |
| ECO: | Epichlorhydrinkautschuke, |
| Q: | Silikonkautschuke, mit Ausnahme von Silikon-Propfpolymerisaten, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1.    Emulsionspolymerisation
2.    Lösungspolymerisation von Kautschuken, die über Variante 1 nicht zugänglich sind,
3.    Außerdem können natürlich vorkommende Latices wie z. B.

Naturkautschuklatex eingesetzt werden.

Die verwendeten Mikrogele (B) sind bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluord, Hexafluorpropen, 2-Chlorbutadien, 2,3-Dichlorbutadien sowie doppelbindungshaltige Carbonsäuren wie z. B. Acrylsäure, Methacrylsäure, Maleinsäure, Itakonsäure etc., doppelbindungshaltige Hydroxyverbindungen wie z. B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff sowie sekundäre Amino-(meth)-acrylsäureester wie 2-tert-Butylaminoethylmethacrylat und 2-tert-Butylaminoethylmethacrylamid etc. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung stellt eine bevorzugte Ausführungsform der Erfindung dar. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/ oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Prinzipiell kann diese Methode auch bei nichtwässrigen Polymerdispersionen angewandt werden, die auf andere Weise wie z. B. durch Umlösung zugänglich sind. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoyl-peroxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C- Doppelbindung durch Hydrazin wie in US 5,302,696 oder US 5,442,009 beschrieben oder ggf. andere Hydrierungsmittein, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß bevorzugt verwendeten Herstellungsverfahren ohne Anwendung energiereicher Strahlung werden stets nicht vollständig homogen vernetzte Mikrogele erhalten, die die oben beschriebenen Vorteile aufweisen können.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus.

Man stellt die gewünschten Größen der Mikrogele dadurch her, daß man die Kautschuklösung in einem flüssigen Medium, vorzugsweise in Wasser gegebenenfalls unter Zugabe geeigneter oberflächenaktiver Hilfsmittein wie z. B. Tensiden mittels geeigneter Aggregate mischt, so daß eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z. B. destillativ entfernen kann.

Als Mikrogele können erfindungsgemäß sowohl nicht-modifizierte Mikrogele, die im wesentlichen keine reaktiven Gruppen insbesondere an der Oberfläche aufweisen als auch, modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z. B. Aldehyd-, Hydroxyl-, Carboxyl-, Nitril- etc. sowie schwefelhaltige Gruppen, wie z. B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist insbesondere die Verbesserung der Mikrogelverträglichkeit zur Herstellung der Matrix, in die das Mikrogel eingearbeitet wird.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufgepfropft. Zweckmäßigerweise werden die funktionellen Monomere vor der vollständigen Vernetzung der Mikrogele hinzudosiert.

Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z. B. durch Ozonolyse sowie durch Halogenierung mit Chlor, Brom und Jod kommen infrage. Auch eine weitere Umsetzung modifizierter Mikrogele wie z. B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 ˚C, bevorzugt 20-95 ˚C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Verwendung von unmodifizierten Mikrogelen ist insbesondere bei unpolaren Medien bevorzugt.

Die Verwendung von modifizierten Mikrogelen ist insbesondere zur Einarbeitung in polare Medien bevorzugt.

Der mittlere Durchmesser der hergestellten Mikrogele kann mit hoher Genauigkeit beispielsweise auf 0,1 Mikrometer (100 nm) ± 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von ± 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden.

Die Aufarbeitung der so hergestellten Mikrogele vorzugsweise auf Basis von BR, SBR, NBR, SNBR, oder Acrylnitril oder ABR kann beispielsweise durch Eindampfen, Koagulation, durch Cokoagulation mit einem weiteren Latexpolymer, durch Gefrierkoagulation (vgl. US-PS 2187146) oder durch Sprühtrocknung erfolgen. Bei der Aufarbeitung durch Sprühtrocknung können handelsübliche auch Fließhilfen wie beispielsweise $CaCO_3$ oder Kieselsäure zugesetzt werden.

In einer bevorzugten Ausführungsform basiert das Mikrogel (B) auf Kautschuk.

In einer bevorzugten Ausführungsform ist das Mikrogel (B) durch funktionelle, gegenüber C=C-Doppelbindungen reaktive Gruppen modifiziert.

In einer bevorzugten Ausführungsform weist das Mikrogel (B) einen Quellungsindex in Toluol bei 23 ˚C von 1 bis 15 auf.

Die erfindungsgemäß verwendete Zusammensetzung aus Mikrogel (B) und nicht-vernetzbarem Medium (A) weist bevorzugt eine Viskosität von 2 mPas bis zu 50000000 mPas, bevorzugter 50 mPas bis zu 3000000 mPas bei einer Drehzahl von 5 s$^{-1}$, mit einem Kegelplattenviskosimeter nach DIN 53018 gemessen, bei 20˚C auf.

Organisches nicht-vernetzbares Medium (A)

Die erfindungsgemäße Zusammensetzung enthält mindestens ein organisches Medium (A), welches bevorzugt bei einer Temperatur von 120˚C eine Viskosität von weniger als 30000 mPas, bevorzugter von weniger als 1000 mPas, bevorzugter von weniger als 200 mPas, bevorzugter von weniger als 100 mPas, noch bevorzugter weniger als 20 mPas bei 120˚C aufweist.

Ein solches Medium ist bei Raumtemperatur (20˚C) flüssig bis fest, bevorzugt flüssig bzw. fließfähig.

Organisches Medium im Sinne der Erfindung bedeutet, dass das Medium mindestens ein Kohlenstoffatom enthält.

Unter nicht-vernetzbaren Medien im Sinne der Erfindung werden insbesondere solche Medien verstanden, die keine über Heteroatome-enthaltende funktionelle Gruppen oder C=C-Gruppen vernetzbare Gruppen enthalten, wie insbesondere übliche Monomere oder Prepolymere, die in üblicher Weise radikalisch, mit UV-Strahlen, thermisch und/ oder durch Polyaddition bzw. Polykondensation unter Zusatz von Vernetzungsmitteln (z. B. Polyisocyanate, Polyamine, Säureanhydride) etc. unter Bildung von Oligomeren oder Polymeren in üblicher Weise vernetzt bzw. polymerisiert werden. Erfindungsgemäß können als organische, nicht-vernetzbare Medien auch solche Medien verwendet werden, die zwar beispielsweise gewisse Anteile an ungesättigten Bindungen (gewisse Polyesteröle, Rapsöl etc.) oder Hydroxygruppen (Polyether) enthalten, die jedoch nicht zu Oligomeren oder Polymeren in üblicher Weise vernetzt bzw. polymerisiert werden.

Bevorzugt handelt es sich bei dem nicht vernetzbaren Medium (A) um bei Raumtemperatur (20˚C) flüssige, nicht vernetzbaren Medien, insbesondere solche die bei Temperaturen von mehr als 100 ˚C bevorzugter mehr als 200 ˚C, noch bevorzugter mehr als 300 ˚C, noch bevorzugter mehr als 350 ˚C bei Normaldruck (1 bar) sieden, wie Kohlenwasserstoffe (geradkettige, verzweigte, cyclische, gesättigte, ungesättigte und/oder aromatische Kohlenwasserstoffe mit 1 bis 200 Kohlenstoffatomen, die gegebenenfalls durch ein oder mehrere Substituenten ausgewählt aus Halogenen, wie Chlor, Fluor, Hydroxy, Oxo, Amino, Carboxy, Carbonyl, Aceto, Amido substituiert sein können), synthetische Kohlenwasserstoffe, Polyetheröle, Esteröle, Phosphorsäureester, Siliciumhaltige Öle und Halogenkohlenwasserstoffe bzw. Halogenkohlenstoffe (s. z. B. Ullmanns Enzyklopädie der technischen Chemie, Verlag Chemie Weinheim, Band 20, (1981) 457 ff, 504, 507ff, 517/518, 524). Diese nicht vernetzbaren Medien (A) zeichnen sich insbesondere durch Viskositäten von 2 bis 1500 $mm^2$/s (cSt) bei 40˚C aus. Die synthetischen Kohlenwasserstoffe werden gewonnen durch Polymerisation von Olefinen, Kondensation von Olefinen oder Chlorparaffinen mit Aromaten oder dechlorierende Kondensation von Chlorparaffinen. Beispiele sind für die Polymerisatöle die Ethylen-Polymere, die Propylen-Polymere, die Polybutene, die Polymere höherer Olefine, die Alkylaromaten. Die Ethylen-Polymere haben Molekulargewichte zwischen 400 und 2000 g/mol. Die Polybutene besitzen Molekulargewichte zwischen 300 und 1500 g/mol.

Bei den Polyetherölen unterscheidet man aliphatische Polyetheröle, Polyalkylenglykole, insbesondere Polyethylen- und Polypropylenglykole, deren Mischpolymerisate, ihre Mono- und Diether sowie Esterether und Diester, Tetrahydrofuran-Polyeröle, Perfluorpolyalkylether und Polyphenylether. Perfluorpolyalkylether haben Molmassen von 1000 - 10000 g/Mol. Die aliphatischen Polyetheröle weisen Viskositäten von 8 bis 19 500 $mm^2$/s bei 38˚C auf.

Polyphenylether werden durch Kondensation von Alkaliphenolaten mit Halogenbenzolen hergestellt. Auch der Diphenylether und seine Alkylderivate finden Anwendung.

Beispiele für die Esteröle sind die Alkylester der Adipinsäure, das Bis-(2-ethylhexyl)-sebacat und das Bis-(3,5,5-trimethylhexyl)-sebacat oder-adipat sowie die Ester natürlicher Fettsäuren mit mono- oder polyfunktionellen Alkoholen, wie TMP-Oleat. Eine weitere Klasse bildet die fluorhaltigen Esteröle. Bei Phosphorsäureestern unterscheidet man Triaryl-, Trialkyl- und Alkylarylphosphate. Beispiele sind Tri-(2-ethylhexyl)-phosphat und Bis-(2-ethylhexyl)-phenyl-phosphat.

Siliciumhaltige Öle sind die Silikonöle (Polymere der Alkyl- und Arylsiloxanreihe) und die Kieselsäureester.

Beispiele für nachwachsende nicht-vernetzbare organische Medien sind Rapsöl, Sonnenblumenöl.

Zu den Halogenkohlenwasserstoffen bzw. Halogenkohlenstoffen gehören chlorierte Paraffine, wie Chlortrifluorethylenpolymeröle und Hexafluorbenzol.

(Nicht-reaktive) Lösemittel nach DIN 55 945 sind Hexan, Siedegrenzbenzine, Testbenzine, Xylol, Solvent Naphtha, Balsamterpentinöl, Methylethylketon, Methylisobutylketon, Methylamylketon, Isophoron, Butylacetat, 1-Methoxypropylacetat, Butylglykolacetat, Ethyldiglykolacetat und N-Methylpyrrolidon (Brock, Thomas, Groteklaes, Michael, Mischke, Peter, Lehrbuch der Lacktechnologie, Curt R. Vincentz Verlag Hannover, (1998) 93ff); jedoch nicht Toluol.

Besonders bevorzugte nicht-vernetzbare Medien schließen ein: Polyether, z. B. Baylube 68CL, naphthenische Öle, z. B. Nynas T 110, paraffinische, hochraffinierte Mineralöle, z. B. Shell Catenex S 932, Esteröle, z. B. Methylester SU, Öle auf Basis nachwachsender Rohstoffe, z. B. raffiniertes Rüböl. Besonders bevorzugte nicht vernetzbare Medien (A) sind die große Klasse der Kohlenwasserstoffe, die Polyetheröle, und die Lösemittel nach DIN 55 945 mit Ausnahme von Toluol.

Die erfindungsgemäß verwendete Zusammensetzung enthält bevorzugt 0,1 bis 90 Gew.-%, bevorzugter 1 - 50 Gew.-%, noch bevorzugter 2 - 30 Gew.-% des Mikrogels (B), bezogen auf die Gesamtmenge der Zusammensetzung.

Die erfindungsgemäß verwendete Zusammensetzung enthält weiterhin bevorzugt 10 bis 99,9 Gew.-%, bevorzugter 50 bis 99 Gew.-%, noch bevorzugter 70 bis 98 Gew.-%, weiterhin bevorzugter 75 bis 95 Gew.-% des organischen Mediums (A)).

Die erfindungsgemäß verwendete Zusammensetzung besteht bevorzugt aus dem organischen nicht vernetzbaren Medium (A) und dem Mikrogel (B) und gegebenenfalls den unten stehenden weiteren Komponenten. Die Anwesenheit von Wasser ist nicht bevorzugt, bevorzugt enthalten die erfindungsgemäßen Zusammensetzungen weniger als 0,8 Gew.-%, noch bevorzugter weniger als 0,5 Gew.-% Wasser. Am meisten bevorzugt ist die Anwesenheit von Wasser ausgeschlossen (< 0,1 Gew.-%). Letzteres ist herstellungsbedingt im allgemeinen bei den erfindungsgemäßen Zusammensetzungen der Fall.

Die erfindungsgemäß verwendete Zusammensetzung kann zusätzlich Füllstoffe, Pigmente und Additive wie Dispergierhilfsmittel, Oxidations- und, Extrem-Pressure- und Verschleiß-Schutz-Additive, Festschmierstoffe, Friction Modifier, Detergent-Dispersant Additive, Schauminhibitoren, Pourpointerniedriger, Haftverbesserer, Konservierungs-Wirkstoffe, Farbstoffe, Antistatika, Entlüfter, Fließmittel, Verlaufsmittel, Hilfsmittel zur Untergrundbenetzung, Anti-Absetzmittel, Hilfsmittel zur Steuerung der Untergrundbenetzung, zur Steuerung der Leitfähigkeit, Demulgatoren, Korrosionschutzadditive, Buntmetalldesaktivatoren, Reibwertmodifizierungsmittel etc. enthalten (W. J. Bartz, Additive in Schmierstoffen 1994 expert verlag Renningen-Malmsheim).

Besonders geeignete Pigmente und Füllstoffe sind beispielsweise: organische Pigmente, silikatische Füllstoffe wie Kaolin, Talkum, Carbonate wie Calciumcarbonat und Dolomit, Bariumsulfat,

Metalloxide, wie Zinkoxid, Calciumoxid, Magnesiumoxid, Aluminiumoxid, hochdisperse Kieselsäuren (gefällte und thermisch hergestellte Kieselsäuren), Metallhydroxide, wie Aluminiumhydroxid und Magnesiumhydroxid, sowie weitere Kautschukgele auf Basis Polychloropren und/oder Polybutadien, die einen hohen Vernetzungsgrad und Teilchengrößen 5 bis 1000 nm besitzen.

Die genannten Füllstoffe können alleine oder im Gemisch eingesetzt werden. In einer besonders bevorzugten Ausführung des Verfahrens werden maximal 5 Gewichtsteile Kautschukgel (B), gegebenenfalls zusammen mit 0 bis 1 Gewichtsteil Füllstoff, und 94 - 99,5 Gewichtsteile des flüssigen nicht-vernetzbaren Mediums (A) zur Herstellung der erfindungsgemäß verwendeten Zusammensetzungen eingesetzt.

Die erfindungsgemäß verwendeten Zusammensetzungen können weitere Hilfsmittel enthalten wie Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, sowie Füllstoffaktivatoren, wie beispielsweise Trimethoxysilan, Polyethylenglykol, oder andere, die in den beschriebenen Industrien bekannt sind.

Die Hilfsmittel werden in üblichen Mengen, die sich u.a. nach dem Verwendungszweck richten, eingesetzt. Übliche Mengen sind z. B. Mengen von 0,1 bis 50 Gew.-%, bezogen auf eingesetzte Mengen an flüssigem Medium (A) bzw. an eingesetztem Kautschukgel (B).

In einer bevorzugten Ausführungsform wird die erfindungsgemäß verwendete Zusammensetzung durch Mischen von mindestens einem nicht-vernetzbaren, organischen Medium (A), welches bei einer Temperatur von 120˚C eine Viskosität von weniger als 30000 mPas aufweist, und mindestens einem trockenen Mikrogelpulver (B) (bevorzugt weniger als 1 Gew.-%, noch bevorzugter weniger als 0,5 Gew.-% flüchtige Anteile (beim Mischen der Komponente (A) und (B) werden keine Mikrogel-Latices verwendet)), das bevorzugt nicht durch energiereiche Strahlen vernetzt ist, mittels eines Homogenisators, einer Perlmühle, einer Dreiwalze, einer Ein- oder Mehrwellen-Extruderschnecke, eines Ultra-Turrax-Gerätes, eines Kneters und/ oder eines Dissolvers, bevorzugt mittels eines Homogenisators, einer Perlmühle oder einer Dreiwalze hergestellt.

Hinsichtlich der Viskosität der herzustellenden Zusammensetzung ist der Kneter, im welchem bevorzugt nur sehr hochviskose (fast feste bis feste) Zusammensetzungen eingesetzt werden können, am eingeschränktesten, d. h. er ist nur in Sonderfällen anwendbar.

Nachteilig an der Dreiwalze ist der vergleichsweise eingeschränkte Viskositätsbereich (tendenziell dicke Zusammensetzungen), geringer Durchsatz und die nicht geschlossene Arbeitsweise (schlechter Arbeitsschutz).

Besonders bevorzugt erfolgt die Homogenisierung der erfindungsgemäß verwendeten Zusammensetzungen mittels eines Homogenisators oder einer Perlmühle. Nachteilig an der Perlmühle ist der hohe Reinigungsaufwand, teure Produktwechsel der verwendbaren Zusammensetzungen sowie der Abrieb von Kugeln und Mahlapparatur.

Sehr bevorzugt erfolgt die Homogenisierung der erfindungsgemäß verwendeten Zusammensetzungen daher mittels eines Homogenisators. Der Homogenisator erlaubt es dünne und dicke Zusammensetzungen bei hohem Durchsatz zu verarbeiten (hohe Flexibilität). Produktwechsel sind vergleichsweise schnell und problemlos möglich.

Überraschend und neu ist, dass es möglich ist, insbesondere durch Zusatz von Mikrogel zu Schmierstoffen oder auf Schmierstoff basierenden Zusammensetzungen das temperaturabhängige rheologische Verhalten derart zu modifizieren, dass im Vergleich zum reinen Schmierstoff eine sehr deutliche Verbesserung des Temperaturverhaltens erreicht wird, wobei es zudem möglich ist, scherstabile und/oder transparente Kombinationen zu erhalten.

Die Mikrogele (B) können in den nicht vernetzbaren organischen Medien bis zu den Primärpartikeln dispergiert werden.

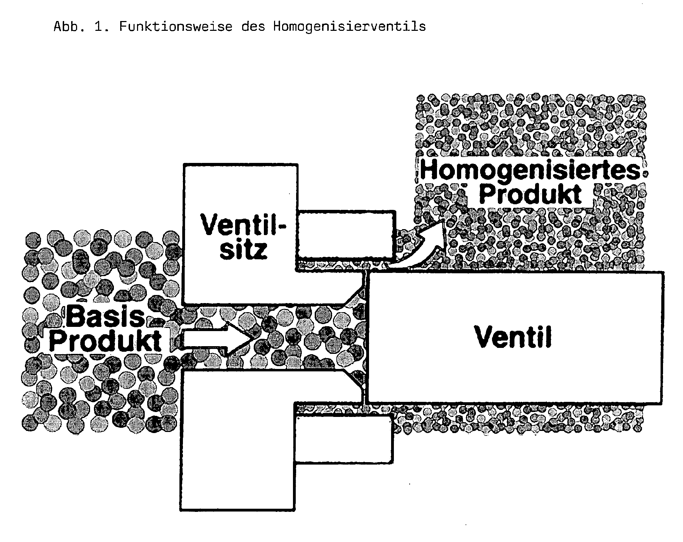

Die Dispergierung der Mikrogele (B) im flüssigen Medium (A) erfolgt bevorzugt in einem Homogenisator im Homogenisierventil (s. Abb. 1).

Bei dem erfindungsgemäß bevorzugt eingesetzten Verfahren werden Agglomerate in Aggregate und/oder Primärpartikel zerteilt. Agglomerate sind physikalisch trennbare Einheiten, bei deren Dispergierung keine Änderung der Primärpartikelgröße erfolgt.

In der Abbildung 1 bedeuten:

> Basic product: Ausgangsprodukt,
> Valve seat: Ventilsitz
> Valve: Ventil
> Homogenised product: Homogenisiertes Produkt).

Das zu homogenisierende Produkt, dass Mikrogel und nicht-vernetzbares organisches Medium enthält, tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation (William D. Pandolfe, Peder Baekgaard, Marketing Bulletin der Fa. APV Homogeniser Group - "High-pressure homogenisers processes, product and applications").

Die Temperatur der erfindungsgemäß verwendeten Zusammensetzung beträgt bei Aufgabe in den Homogenisator zweckmäßig -40 - 140°C, vorzugsweise 20 - 80 °C.

Die zu homogenisierende erfindungsgemäß verwendete Zusammensetzung wird zweckmäßig bei einem Druck von 20 bis 4000 bar, bevorzugt 100 bis 4000 bar, bevorzugt 200 bis 4000 bar, bevorzugt 200 - 2000 bar, sehr bevorzugt 500 - 1500 bar im Gerät homogenisiert. Die Anzahl der Durchläufe richtet sich nach der Güte gewünschten Dispergiergüte und kann zwischen einem und 20, bevorzugt einem bis 10, bevorzugter einem bis vier Durchgängen varüeren.

Die erfindungsgemäß verwendeten Zusammensetzungen besitzen eine besonders feine Partikelverteilung, die besonders mit dem Homogenisator erreicht wird, der auch hinsichtlich der Flexibilität des Verfahrens bezüglich variierender Viskositäten der flüssigen Medien und der resultierenden Zusammensetzungen und notwendigen Temperaturen sowie der Dispergiergüte äußerst vorteilhaft ist.

Die Erfindung wird mit Blick auf die folgenden Beispiele näher erläutert. Die Erfindung ist selbstverständlich nicht auf diese Beispiele beschränkt.

## Beispiele

### Beispiel 1:

### Beispiel 1: Transparenz und Phasentrennung sowie rheologische und tribologische Eigenschaften der Schmierstoffen aus der Kombination 2% Mikrogel - nicht-vernetzbares organisches Medium

In dem nachfolgend beschriebenen Beispiel 1 wird gezeigt, dass unter der Verwendung von Mikrogelen auf Basis von SBR (styrene butadiene rubber) und BR (butadiene rubber) erfindungsgemäße Zusammensetzungen erhalten werden, die bestimmte Charakteristika bezüglich Transparenz, Separationsstabilität und insbesondere temperaturabhängiger rheologischer Eigenschaften zeigen. Daraus ergibt sich der u. a. der Einsatz der erfindungsgemäß verwendeten Zusammensetzung als funktionales, rheologisches Additiv. Günstige Voraussetzungen für den Einsatz in Schmierstoffen haben Mikrogele, die die Viskosität bei tiefen Temperaturen, d. h. ca. Raumtemperatur (20°C) und weniger, wenig beeinflussen und bei hohen Temperaturen, d. h. 100°C und höher, die Viskosität stark erhöhen. Dies sind insbesondere nicht-modifizierte Mikrogele auf Basis von SBR.

In der nachfolgenden Tabelle ist die Zusammensetzung in verallgemeinerter Form angegeben:

| | |
|---|---|
| 1. Schmieröl | 98 % |
| 2. Mikrogel | 2 % |
| Summe | 100 % |

Bei Shell Catenex S 932 handelt es sich um paraffinisches, hochraffiniertes Mineralöl der Deutschen Shell GmbH.

Bei Baylube 68CL handelt es sich um einen Polyether der RheinChemie Rheinau GmbH.

Bei Nynas T 110 handelt es sich um hydriertes naphthenisches Öl der Nynas Naphthenics AB.

Infineum C 9237 ist ein Mono/Bissuccinimid, das Polyolefinamidalkylenamin in stark raffiniertem Mineralöl enthält.

Micromorph 5P ist ein vernetztes Kautschukgel mit einer OH-Zahl von 4 auf Basis von SBR der Firma RheinChemie Rheinau GmbH.

Micromorph 5P besteht aus 40 Gew.-% Styrol, 60 Gew.-% Butadien und 2,5 Gew.-% Dicumylperoxid.

Das Mikrogel OBR 1210 ist ein vernetztes, oberflächenmodifiziertes Kautschukgel (Laborprodukt) auf Basis SBR der Fa. Lanxess AG. Micromorph 4P und 5P sind vernetzte, nicht oberflächenmodifizierte Kautschukgele auf Basis SBR der Fa. RheinChemie Rheinau GmbH.

OBR 1326K ist ein vernetztes, oberflächenmodifiziertes Kautschukgel (Laborprodukt) auf Basis BR (butadiene rubber) der Lanxess AG (Tab. 1). Die Mikrogele werden analog hergestellt wie in den Herstellungsbeispielen für Micromorph 4P und OBR 1326K beschrieben.

Tab. 1. Zusammensetzung der Mikrogele OBR 1210, OBR 1326K, Micromorph 4P und Micromorph 5P.

| Bezeichnung | Butadien | Styrol | TMPTMA | HEMA | Bemerkungen |
|---|---|---|---|---|---|
| OBR 1210 | 51,6 | 34,4 | 12,5 | 1,5 | SBR |
| OBR 1326K | 87 | - | 3 | 10 | BR |
| Micromorph 4P | 61 | 39 | - | - | SBR |
| Micromorph 5P | 61 | 39 | - | - | Wie Micromorph 4P; jedoch 2,5 DCP[1) |
| 1) DCP - Dicumylperoxid | | | | | |

Die charakteristischen Daten der SBR-Gele und des NBR-Gels sind in der Tabelle 2 zusammengefasst.

Tab. 2. Eigenschaften von OBR 1210, OBR 1326K, Micromorph 4P und Micromorph 5P.

| Mikrogel | Gel-typ | Analytische Daten | | | | | | | | |
|---|---|---|---|---|---|---|---|---|---|---|
| | | $d_{50}$ | $O_{spez.}$ | Teil-chen- | $T_g$ | Gel | QI | OH- | Säu- re- | Tg-Stufe |
| | | | | Dichte | | | | Zahl | zahl | DSC/2. Aufhzg. |
| | | [nm] | [m$^2$/g] | [g/ml] | [˚C] | [Gew.- %] | | [mg KOH/g] | | [˚C] |
| OBR 1210 | SBR | 60 | 102 | 0,993 | -20,0 | 95,4 | 4,9 | 4 | 1 | - |
| OBR 1326K | SBR | 49 | 123 | 0,928 | -77,0 | 97 | 8 | 41 | 5 | 8 |
| Micro-morph 4P | SBR | 57 | 111 | - | -15,0 | 94,6 | 9,0 | 8 | 6 | - |

(fortgesetzt)

| Mikrogel | Gel-typ | Analytische Daten | | | | | | | | |
|---|---|---|---|---|---|---|---|---|---|---|
| | | $d_{50}$ | $O_{spez.}$ | Teil-chen- | $T_g$ | Gel | QI | OH- | Säu- re- | Tg-Stufe |
| | | | | Dichte | | | | Zahl | zahl | DSC/2. Aufhzg. |
| | | [nm] | [m$^2$/g] | [g/ml] | [˚C] | [Gew.- %] | | [mg KOH/g] | | [˚C] |
| Micro-morph 5P | SBR | 57 | 111 | - | - | 92 | < 5 | 4 | 1 | - |

In der Tabelle bedeuten:

$d_{50}$: Der Durchmesser $\overline{d}_{50}$ ist nach DIN 53 206 als der Mittelwert definiert. Es stellt hier den mittleren Teilchendurchmesser der Teilchen im Latex dar. Der Teilchendurchmesser der Latexteilchen wurde hier mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung nicht ändert.

$O_{spez.}$: spezifische Oerfläche in m$^2$/g

Tg: Glastemperatur

Für die Bestimmung von Tg: und ΔTg wird das Gerät DSC-2 von Perkin-Elmer benutzt.

Breite des Glasübergangs:

Die Breite des Glasübergangs wurde wie oben beschrieben bestimmt.

Quellungsindex QI

Der Quellungsindex QI wurde wie folgt bestimmt:

Der Quellungsindex wird aus dem Gewicht des in Toluol bei 23˚ für 24 Stunden gequollenen lösungsmittelhaltigen Mikrogels und dem Gewicht des trockenen Mikrogels berechnet:

$$Qi = Naßgewicht\ des\ Mikrogels\ /Trockengewicht\ des\ Mikrogels.$$

Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm gewogen und anschließend bei 70 ˚C bis zur Gewichtskonstanz getrocknet und nochmals gewogen.

OH-Zahl (Hydroxylzahl)

Die OH-Zahl (Hydroxylzahl) wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl

Die Säurezahl wird wie oben bereits erwähnt nach DIN 53402 bestimmt und entspricht der Menge KOH in mg, die erforderlich ist um ein g des Polymers zu neutralisieren.

Gelgiehalt

Der Gelgehalt entspricht dem in Toluol unlöslichen Anteil bei 23˚C. Der Gelgehalt ergibt sich aus dem Quotienten des getrockneten Rückstands und der Einwaage und wird in Gewichtsprozent angegeben.

Kontrolle der Homogenität:

Die Proben wurden eine Woche nach der Herstellung auf Separation visuell geprüft.

Kontrolle der Transparenz:

Die Transparenz der Proben wurde visuell überprüft. Proben, die Separation oder Flokkulation zeigten, wurden vor Beurteilung aufgerührt.

Herstellungsbeispiel 1 zu OBR 1326K (Direktvernetzte Mikrogele)

Für die Herstellung der Mikrogele werden folgende Monomere eingesetzt: Butadien, Trimethylolpropantrimethacrylat (TMPTMA) und Hydroxyethylmethacrylat (HEMA).

Es wurden 252 g des Emulgator Dresinate / Edinor in 10,762 kg Wasser gelöst und in einem 40 1-Autoklaven vorgelegt. Der Autoklav wurde dreimal evakuiert und mit Stickstoff beaufschlagt. Danach wurden 4893 g Butadien, 186 g Trimethylolpropantrimethacrylat (90%ig), 563 g Hydroxyethylmethacrylat (96%) zugegeben. Die Reaktionsmischung wurde unter Rühren auf 30˚C aufgeheizt. Anschließend wurde eine wässrige Lösung bestehend aus 95 g Wasser, 950 mg Ethylendiamintetraessigsäure (Merck-Schuchardt), 760 mg Eisen(II)-sulfat*7H$_2$0, 1,95 g Rongalit C (Merck-Schuchardt) sowie 2,95 g Trinatriumphosphat*12H$_2$O zudosiert.

Die Reaktion wurde durch Zugabe von 3,15 g p-Menthanhydroperoxid (Trigonox NT 50 der Akzo-Degussa) in 200 g Wasser gestartet, wobei mit 185 g Wasser nachgespült wurde. Nach 2,5 Stunden Reaktionszeit wurde die Reaktionstemperatur auf 40 ˚C erhöht. Nach einer weiteren Stunde Reaktionszeit wurde mit 350 mg p-Menthanhydroperoxid (Trigonox NT 50), das in einer wässrigen Lösung von 25 g Wasser und 1,25 g Mersolat K30/95 gelöst war, nachaktiviert. Hierbei wurde die Polymerisationstemperatur auf 50˚C erhöht. Bei Erreichen eines Polymerisationsumsatzes >95 % wurde die Polymerisation durch Zugabe einer wäßrigen Lösung von 53 g Diethylhydroxylamin gelöst in 100 g Wasser, abgestoppt. Danach wurden nicht umgesetzte Monomeren durch Strippen mit Wasserdampf aus dem Latex entfernt. Der Latex wurde filtriert und wie im Beispiel 2 der US 6399706 mit Stabilisator versetzt, koaguliert und getrocknet.

Die Gele wurden sowohl im Latexzustand mittels Ultrazentrifugation (Durchmesser und spezifische Oberfläche) sowie als Festprodukt bezüglich der Löslichkeit in Toluol (Gelgehalt, Quellingsindex/QI), durch acidimitrische Titration (OH-Zahl und COOH-Zahl) und mittels DSC (Glastemperatur/Tg und Breite der Tg-Stufe) charakterisiert.

Herstellungsbeispiel 2 zu Micromorph 4P (Peroxidisch vernetzte Mikrogele)

Die Herstellung des Mikrogels erfolgte durch Vernetzung eines SBR-Latex mit 39 Gew.% eingebautem Styrol (Krylene 1721 von Bayer France) in Latexform mit 1 phr Dicumylperoxid (DCP).

Die Vernetzung von Krylene 1721 mit Dicumylperoxid erfolgte wie in den Beispielen 1) - 4) der US 6127488 beschrieben, wobei für die Vernetzung 1 phr Dicumylperoxid eingesetzt wurden. Vor Einsatz des Mikrogels wird es in einem Vakuumtrockenschrank der Firma Haraeus Instruments, Typ Vacutherm VT 6130, bei 100 mbar bis zur Gewichtskonstanz getrocknet.

Herstellung der erfindungsgemäß verwendbaren Zusammensetzungen

Für die Herstellung der erfindungsgemäß verwendbaren Zusammensetzung wurden die jeweiligen Schmieröle vorgelegt und das jeweilige Mikrogel oder ein auf dem gleichen Mikrogel und nicht-vernetzbares organisches Medium basierendes, bereits dispergiertes "Konzentrat" unter Rühren mittels Dissolver zugegeben und im Falle eines Konzentrates zusätzlich mit dem Ultra-Turrax behandelt. Die Mischung wurde mindestens einen Tag lang stehen gelassen und dann mit dem Homogenisator weiterverarbeitet. Die erfindungsgemäßen Zusammensetzung wurde bei Raumtemperatur in den Homogenisator gegeben und bei 900 bis 1000 bar im Batchbetrieb zwei- bis sechsmal durch den Homogenisator gegeben. Beim ersten Durchgang erwärmt sich die Mikrogelpaste auf ca. 40˚C, beim zweiten Durchgang auf ca. 70˚C. Danach wurde die Mikrogelpaste auf Raumtemperatur durch Stehenlassen abgekühlt und der Vorgang wiederholt, bis die gewünschte Anzahl an Durchgängen erreicht worden sind.

Die rheologischen Eigenschaften der Zusammensetzung wurden mit KapillarViskosimetern der Bauart Ubbelohde gemäß DIN 51562 ermittelt.

Die rheologischen Eigenschaften der Zusammensetzung wurden außerdem mit einem Rheometer, MCR300, der Firma Physica bestimmt. Als Messkörper wurde ein Platte-Kegel-System, CP 50-2, benutzt. Die Messungen wurden bei 20˚C, 40˚C oder 100˚C durchgeführt.

Für die oben beschriebenen Mikrogele sind einige Messergebnisse in der folgenden Tabelle 3 dargestellt. Die in der Tabelle 3 aufgeführte Kennzahl berechnet sich nach oben aufgeführter Formel I.

Tab. 3. Kinemeatische Viskositäten von Mikrogel (OBR 1210, OBR 1326K, Micromorph 4P und Micromorph 5P) haltigen nicht-vernetzbaren organischen Medien (Baylube 68CL, Nynas T110, Shell Catenex S 932).

| Nicht-vernetzbares organisches Medium | Mikrogel | Viskosität, 40˚C | Viskosität, 100˚C | Kennzahl nach Formel I |
|---|---|---|---|---|
| | | $[mm^2/s]$ | $[mm^2/s]$ | [ ] |
| Baylube 68 CL | - | 76,1 | 15,5 | 212 |
| Baylube 68 CL | OBR 1210 | 119 | 24,8 | 236 |
| Shell Catenex S 932 | - | 57,6 | 7,6 | 94 |
| Shell Catenex S 932 | Micromorph 4P | 111,8 | 15,0 | 137 |
| Nynas T 110 | - | 116,1 | 9,2 | 21 |
| Nynas T 110 | Micromorph 5P | 190 | 17,4 | 98 |
| Nynas T 110 | Micromorph 5P/ InfineumC9327 | 202,5 | 20,9 | 121 |
| Nynas T 110 | OBR 1326K/ InfineumC9327 | 146,2 | 11,55 | A:50 |

Aus Tab. 3 ist ersichtlich, dass es viele Zusammensetzungen gibt, die zum einen auf unterschiedlichen Schmierölen basieren und zum anderen eine Temperaturabhängigkeit der Viskosität zeigen, die deutlich besser ist als die des reinen Schmierstoffes.
Hervorzuheben ist die Mischung mit OBR 1326K, welche nicht absetzt und nach Filtration völlig klar ist, wobei der Mikrogelgehalt im Rahmen der Fehlergrenzen konstant bleibt.
In der folgenden Tabelle 4 wird zudem gezeigt, dass Mikrogele geeignet sind, um nicht-vernetzbare organische Medien hinsichtlich ihres temperaturabhängigen rheologischen Verhaltens zu optimieren, wobei es möglich ist, scherstabile Mikrogel-nicht-vernetzbare organische Medium-Kombinationen zu erhalten.

Tabelle 4

| Mikrogel/Prozente/Nicht vernetzbares org. Medium | Viskosität, 100˚C vor Pumpentest 1 | Viskosität, 100˚C nach Pumpentest 1(250 Zyklen) | relativer Visk.verlust □rel,1 |
|---|---|---|---|
| | [cSt] | [cst] | [%] |
| Baylube 68CL / 2 / OBR 1210 | 25,8 | 23,9 | -7,4 |
| Nynas T 110 / 2 / Micromorph 5P | 17,4 | 17,5 | +0,6 |

Die gemessenen Werte zeigen überraschenderweise eine Verbesserung des rheologischen Verhaltens über einen breiten Temperaturbereich gegenüber der mikrogelfreien Referenz (jeweiliger Schmierstoff), ausgedrückt durch die beschriebene Kennzahl.
Zudem können die beschriebenen Kombinationen Eigenschaften wie ausgezeichnete Scherstabilität und hervorragende Transparenz aufweisen, so dass kommerziell sehr interessante Produkte entstehen. So zeigt die Kombination Nynas T110 - Micromorph 5P eine ausgezeichnete Scherstabilität beim Pumpentest in Anlehnung an DIN 51382.
Die beschriebenen oder ähnliche Zusammensetzungen können vorteilhaft verwendet werden in Schmierstoffen wie z. B. Motoren- und Getriebeölen, Hydraulikölen und weiteren (Hochtemperatur-)Industrieölen, Metallbearbeitungsflüssigkeiten, Sägekettenölen etc., wobei diese auch in ihren Tieftemperatureigenschaften verbessert sind.

**Patentansprüche**

1. Verwendung von vernetzten Mikrogelen (B) als Zusatz für nicht-vernetzbare organische Medien (A) zur Anwendung bei Temperaturen von mindestens 100°C.

2. Verwendung von vernetzten Mikrogelen (B) nach Anspruch 1 als rheologisches Additiv.

3. Verwendung von vernetzten Mikrogelen (B) als Additiv zur Modifikation des temperaturabhängigen Verhaltens nicht-vernetzbarer organischer Medien (A).

4. Verwendung nach einem der Ansprüche 1 bis 3, worin das temperaturabhängige Verhalten des nicht-vernetzbaren organischen Mediums (A), charakterisiert durch die kinematischen Viskosität bei 40°C und 100°C, modifiziert wird.

5. Verwendung nach einem der Ansprüche 1 bis 4, worin die aus den Viskositäten des nicht-vernetzbaren organischen Mediums (A) bei 40°C und 100°C bestimmte Kennzahl durch den Zusatz des Mikrogels (B) um mindestens 10 % erhöht wird, wobei die Kennzahl wie folgt ermittelt wird:

$$\text{Kennzahl} = \left[(L-U)/(L-H)\right] \times 100$$

wobei

L: kinematische Viskosität bei 40°C eines Referenz-Mediums mit der Kennzahl 0, das dieselbe kinematische Viskosität bei 100°C besitzt, wie das zu bestimmende nicht-vernetzbare Medium (A)
H: kinematische Viskosität bei 40°C eines Referenz-Mediums mit Kennzahl 100, das dieselbe kinematische Viskosität bei 100°C besitzt, wie das zu bestimmende nicht-vernetzbare Medium
U: : kinematische Viskosität bei 40°C des zu bestimmenden nicht-vernetzbaren Mediums

6. Verwendung nach einem der Ansprüche 1 bis 5, als Zusatz zur Erhöhung der Viskosität nicht-vernetzbarer organischer Medien.

7. Verwendung von vernetzten Mikrogelen (B) als Zusatz in nicht-vernetzbaren organischen Medien (A), die aus der Gruppe ausgewählt werden, die besteht aus: Motorölen, Getriebeölen, Hydraulikölen, Turbinenölen, Kompressorenölen, Industrieölen, Metallbearbeitungsflüssigkeiten und Sägekettenölen.

8. Verwendung nach Anspruch 7, worin die genannten nicht-vernetzbaren organischen Medien bei Temperaturen von mehr als 100°C angewendet werden.

9. Verwendung nach einem der Ansprüche 1 bis 8, worin das vernetzte Mikrogel (B) einen durchschnittlichen Teilchendurchmesser der Primärpartikel von 5 bis 500 nm aufweist.

10. Verwendung nach einem der Ansprüche 1 bis 9, worin das nicht-vernetzbare, organische Medium (A) bei einer Temperatur von 120°C eine Viskosität von weniger als 1000 mPas aufweist.

11. Verwendung nach einem der Ansprüche 1 bis 10, worin das nicht-vernetzbare, organische Medium (A) bei einer Temperatur von 120°C eine Viskosität von weniger als 200 mPas aufweist.

12. Verwendung nach einem der Ansprüche 1 bis 11, worin die Primärpartikel des Mikrogels (B) eine annähernd kugelförmige Geometrie aufweisen.

13. Verwendung nach einem der Ansprüche 1 bis 12, worin die Abweichung der Durchmesser eines einzelnen Primärpartikels des Mikrogels (B), definiert als

$$[ (d1 - d2) / d2] \times 100,$$

worin d1 und d2 zwei beliebige Durchmesser eines beliebigen Schnittes des Primärpartikels sind und d1 > d2 ist, weniger als 250 % beträgt.

14. Verwendung nach Anspruch 13, worin die genannte Abweichung weniger als 50 % beträgt.

15. Verwendung nach einem der Ansprüche 1 bis 14, worin die Primärpartikel des Mikrogels (B) eine durchschnittliche Teilchengröße von weniger als 99 nm aufweisen.

16. Verwendung nach einem der Ansprüche 1 bis 15, worin das Mikrogel (B) in Toluol bei 23˚C unlösliche Anteile von mindestens etwa 70 Gew.-% aufweist.

17. Verwendung nach einem der Ansprüche 1 bis 16, worin das Mikrogel (B) in Toluol bei 23˚C einen Quellungsindex von weniger als etwa 120 aufweist.

18. Verwendung nach einem der Ansprüche 1 bis 17, worin das Mikrogel (B) eine Glastemperatur von -100˚C bis +120˚C aufweist.

19. Verwendung nach einem der Ansprüche 1 bis 18, worin das Mikrogel (B) eine Breite des Glasübergangsbereichs von größer als etwa 5 ˚C aufweist.

20. Verwendung nach einem der Ansprüche 1 bis 19, worin das Mikrogel (B) durch Emulsionspolymerisation erhältlich ist.

21. Verwendung nach einem der Ansprüche 1 bis 20, worin das Mikrogel (B) auf Kautschuk basiert.

22. Verwendung nach einem der Ansprüche 1 bis 21, worin das Mikrogel (B) auf Homopolymeren oder statistischen Copolymeren basiert.

23. Verwendung nach einem der Ansprüche 1 bis 22, worin das Mikrogel (B) keine funktionelle Gruppen aufweist.

24. Verwendung nach einem der Ansprüche 1 bis 22, worin das Mikrogel (B) funktionelle Gruppen aufweist.

25. Verwendung nach Anspruch 24, worin die funktionelle Gruppe eine Hydroxyl-, Epoxy-, Amin-, Säureamid-, Säureanhydrid-, Isocyanat- oder eine ungesättigte Gruppe (z. B. C=C) ist.

26. Verwendung nach einem der Ansprüche 1 bis 26, worin das nicht-vernetzbare organische Medium (A) ausgewählt wird aus der Gruppe, die aus gesättigten oder aromatischen Kohlenwasserstoffen, Mineralölen und synthetischen Kohlenwasserstoffölen, natürlichen und synthetischen Esterölen auch auf Basis nachwachsender Rohstoffe, Polyetherölen, Polyetheresterölen, Phosphorsäureestern, siliciumhaltigen Ölen, Halogenkohlenwasserstoffen besteht.

27. Verwendung nach einem der Ansprüche 1 bis 26, worin das Gewichtsverhältnis nicht-vernetzbares organisches Medium (A) : Mikrogel (B) von 50 : 50 bis 99,9 : 0,1 beträgt.

28. Verwendung nach einem der Ansprüche 1 bis 27, worin das Gewichtsverhältnis nicht-vernetzbares organisches Medium (A) / Mikrogel (B) bevorzugt von 70 : 30 bis 99,7 : 0,3, besonders bevorzugt 88 : 12 bis 98 : 2 beträgt.

29. Verwendung nach einem der Ansprüche 1 bis 28, worin das nicht-vernetzbare organische Medium (A) ein oder mehrere Schmierstoff-Additive enthält.

30. Verwendung nach Anspruch 29, worin das Additiv ausgewählt ist aus der Gruppe, die besteht aus: Oxidations- und Korrosionsinhibitoren, Extrem-Pressure- und Verschleiß-Schutz-Additiven, Festschmierstoffen, Friction Modifiern, Detergent-Dispersant-Additiven, Dispergierhilfsmitteln, Schauminhibitoren, Pourpointerniedrigern, Haftverbesserern, Konservierungs-Wirkstoffen, Pigmenten, Farbstoffen oder Antistatika.

**31.** Verwendung nach einem der Ansprüche 1 bis 30, worin das Einarbeiten des vernetzten Mikrogels (B) in das nicht-vernetzbare organische Medium (A) mittels eines Homogenisators, einer Perlmühle (Rührwerkskugelmühle), einer Dreiwalze, einer Ein- oder Mehrwellen-Extruderschnecke, eines Kneters, eines Ultra-Turrax-Gerätes und/oder eines Dissolvers erfolgt ist.

Abb. 1. Funktionsweise des Homogenisierventils

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4220563
- GB 1078400 A
- EP 405216 A
- EP 854171 A
- EP 0953615 A2
- EP 0953615 A3
- US 20030088036 A1
- EP 1262510 A1
- DE 2910154
- DE 3742180 A
- EP 2004052290 W
- DE 4220563 A
- DE 19701489
- DE 19701488
- DE 19834804
- DE 19834803

- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 5302696 A
- US 5442009 A
- US 2187146 A
- US 6399706 B
- US 6127488 A

**In der Beschreibung aufgeführte Nicht-Patentliteratur**

- *Chinese Journal of Polymer Science,* 2002, vol. 20 (2), 93-98
- **LACKE ; DRUCKFARBEN.** Römpp Lexikon. Georg Thieme Verlag, 1998
- **H.G. ELIAS.** *Makromoleküle,* 1992, vol. 2, 99 ff
- **HOUBEN-WEYL.** *Methoden der organischen Chemie,* vol. 14 (2), 848
- *Ullmanns Enzyklopädie der technischen Chemie,* 1981, vol. 20, 457 ff, 504, 507ff, 517, 518, 524
- **BROCK ; THOMAS ; GROTEKLAES ; MICHAEL ; MISCHKE ; PETER.** Lehrbuch der Lacktechnologie. Curt R. Vincentz Verlag, 1998, 93ff

- **W. J. BARTZ.** *Additive in Schmierstoffen,* 1994
- High-pressure homogenisers processes, product and applications. **WILLIAM D. PANDOLFE ; PEDER BAEKGAARD.** Marketing Bulletin der Fa. APV Homogeniser Group
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250